# EUROPEAN PATENT APPLICATION

(11) **EP 2 957 582 A1**
(43) Date of publication of application: **23.12.2015**
(21) Application number: 14172869.1
(22) Date of filing: 18.06.2014
(51) Int. Cl.: C08G 18/48, C08G 18/76, C08G 18/12

(54) **Isocyanate-based prepolymers**

(71) Applicant: HUNTSMAN INTERNATIONAL LLC, Salt Lake City, Utah 84108 (US); Huntsman (Europe) BVBA, 3078 Everberg (BE)
(72) Inventor: HOLVOET, Servaas, 3020 Veltem-Beisem (BE); PHANOPOULOS, Christopher, 3080 Moorsel (BE); DESESQUELLES, Fabrice, 1000 Brussels (BE)
(74) Representative: Swinnen, Anne-Marie

(57) **Abstract**

The present invention relates to an isocyanate-containing prepolymer obtainable by (a) contacting at least one isocyanate with at least one isocyanate-reactive compound and (b) contacting the product of step (a) with at least one amine; wherein said at least one isocyanate-reactive compound comprises at least one OH group; wherein the molar ratio of the NCO of said at least one isocyanate, to the OH of said at least one isocyanate-reactive compound is of at least 2.0; wherein said at least one isocyanate-reactive compound has a number average molecular weight of at least 2000 Da; and wherein the molar ratio of said at least one amine, to the NCO of the product of step (a) is greater than 0.4.

The present invention also relates to a process for preparing said isocyanate-containing prepolymer. The present invention also relates to the use of said isocyanate-containing prepolymer, and to a product comprising said prepolymer.

## Description

### FIELD OF THE INVENTION

The present invention relates to isocyanate-based prepolymers, a process for their preparation and uses thereof.

### BACKGROUND TO THE INVENTION

Prepolymers bearing isocyanate groups are commonly used in industry to make a wide variety of polyurethane products. These prepolymers are usually prepared by mixing a polyol with an excess of isocyanate monomer.

The presence of unreacted isocyanate monomers in these prepolymers can be problematic for different reasons. Prepolymers are sometimes processed at elevated temperatures (e.g. hotmelt adhesives, 100 to 170°C), at which the isocyanate monomers have considerable vapor pressure. Furthermore, some isocyanate monomers can have a significant vapor pressure even at room temperature. In view thereof, measureable quantities of isocyanates constantly escape even under normal processing conditions. Isocyanate vapors are toxic in view of their irritating and sensitizing effect, and in many countries their emission has to be avoided on industrial hygiene grounds.

In the art, several methods exist to reduce free monomer content in prepolymers. Monomers can be stripped by distillation, more in particular for higher vapor pressure isocyanate based prepolymers. However, some isocyanates, on the other hand, have very low vapor pressures. Furthermore, vapor pressure is proportional to concentration. This combination makes it extremely difficult to remove some of these monomers from prepolymers down to extremely low levels. This process is expensive, requires high cost equipment, and a high investment for low vacuum pumps.

Alternatively, free monomer content can be reduced by asymmetric prepolymerization using asymmetric diisocyanates. However, the mechanical properties for such prepolymers can be less desirable. Additionally, raw material availability and price may be an issue.

Therefore, there remains a need for isocyanate-based prepolymers and processes to prepare said prepolymers that overcome one or more of the aforementioned issues. It is an object of the present invention to overcome one or more of the aforementioned issues. More in particular, it is an object of the present invention to reduce free monomer content in isocyanate-based prepolymers. More in particular, it is an object of the present invention to reduce free monomer content in isocyanate-based prepolymers, while keeping good processability. More in particular, it is an object of the present invention to reduce free monomer content in isocyanate-based prepolymers, while keeping good mechanical properties.

### SUMMARY OF THE INVENTION

The present inventors have now surprisingly found that, in isocyanate-containing prepolymer comprising amines, the appropriate selection of the molar ratio of the amine, to the NCO content of the isocyanate-containing prepolymer significantly reduces the free monomer content of said isocyanate-containing prepolymers.

According to a first aspect of the present invention, an isocyanate-containing prepolymer is provided, said prepolymer being obtainable by (a) contacting at least one isocyanate with at least one isocyanate-reactive compound and (b) contacting the product of step (a) with at least one amine; wherein said at least one isocyanate-reactive compound comprises at least one OH group; wherein the molar ratio of NCO of said at least one isocyanate, to the OH of said at least one isocyanate-reactive compound is of at least 2.0; wherein said at least one isocyanate-reactive compound has a number average molecular weight of at least 2000 Da; and wherein the molar ratio of said at least one amine, to the NCO of the product of step (a) is greater than 0.4.

According to a second aspect, the present invention also encompasses a process for preparing an isocyanate-containing prepolymer according to the first aspect, comprising the steps of:
(a) contacting at least one isocyanate with at least one isocyanate-reactive compound; wherein said at least one isocyanate-reactive compound comprises at least one OH group; wherein the molar ratio of the NCO of said at least one isocyanate, to the OH of said at least one isocyanate-reactive compound is of at least 2.0; wherein said at least one isocyanate-reactive compound has a number average molecular weight of at least 2000 Da; and
(b) contacting the product of step (a) with at least one amine; wherein the molar ratio of said at least one amine, to the NCO of the product of step (a) is greater than 0.4;
thereby preparing an isocyanate-containing prepolymer.

According to a third aspect, the invention encompasses a polyisocyanate composition comprising the isocyanate-containing prepolymer according to the first aspect of the invention.

According to a fourth aspect, the present invention also encompasses the use of the prepolymer according to the first aspect of the invention or the use of the polyisocyanate composition according to the third aspect of the invention for the preparation of a polyurethane.

According to a fifth aspect, the present invention also encompasses the use of the prepolymer according to the first aspect of the invention, or the use of the polyisocyanate composition according to the third aspect of the invention, for the preparation of an adhesive, a coating, an elastomer, or a foam.

According to a sixth aspect, the invention encompasses a product comprising the prepolymer as defined in the first aspect of the invention, or the polyisocyanate composition according to the third aspect of the invention.

The independent and dependent claims set out particular and preferred features of the invention. Features from the dependent claims may be combined with features of the independent or other dependent claims as appropriate.

The above and other characteristics, features and advantages of the present invention will become apparent from the following detailed description, which illustrates, by way of example, the principles of the invention.

### DETAILED DESCRIPTION OF THE INVENTION

Before the present formulations of the invention are described, it is to be understood that this invention is not limited to particular formulations described, since such formulations may, of course, vary. It is also to be understood that the terminology used herein is not intended to be limiting, since the scope of the present invention will be limited only by the appended claims.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

As used herein, the singular forms "a", "an", and "the" include both singular and plural referents unless the context clearly dictates otherwise. By way of example, "an isocyanate group" means one isocyanate group or more than one isocyanate groups.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the terms "% by weight", "wt%", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

Whenever the term "substituted" is used in the present invention, it is meant to indicate that one or more hydrogens on the atom indicated in the expression using "substituted" is replaced with a selection from the indicated group, provided that the indicated atom's normal valency is not exceeded.

Where groups may be optionally substituted, such groups may be substituted once or more, and preferably once, twice or thrice. Substituents may be selected from but not limited to, for example, the group comprising alcohol, carboxylic acid, ester, amino, amido, ketone, ether and halide functional groups.

As used herein the terms such as "substituted or unsubstituted C₁₋₂₄alkyl", "substituted or unsubstituted C₃₋₂₄cycloalkyl", "substituted or unsubstituted C₆₋₂₄aryl" or "substituted or unsubstituted heteroaryl" are synonymous "C₁₋₂₄alkyl, C₃₋₂₄cycloalkyl, C₆₋₂₄aryl, heteroaryl each being optionally substituted with...".

As used herein the terms such as "alkyl, aryl, cycloalkyl, or heteroaryl each being optionally substituted with..." or "alkyl, aryl, cycloalkyl, or heteroaryl optionally substituted with ..." encompasses "alkyl optionally substituted with...", "aryl optionally substituted with...", "cycloalkyl optionally substituted with..." and so on.

As used herein, the term "halo" or "halogen" as a group or part of a group is generic for fluoro, chloro, bromo, iodo.

The term "C₁₋₂₄alkyl", as a group or part of a group, refers to a hydrocarbyl radical of formula CₙH₂ₙ₊₁ wherein n is a number ranging from 1 to 24. Preferably, the alkyl group comprises from 1 to 20 carbon atoms, for example 1 to 10 carbon atoms, for example 1 to 6 carbon atoms, for example 1 to 4 carbon atoms. Alkyl groups may be linear, or branched and may be substituted as indicated herein. When a subscript is used herein following a carbon atom, the subscript refers to the number of carbon atoms that the named group may contain. Thus, for example, C₁₋₂₄alkyl means an alkyl of 1 to 24 carbon atoms. Thus, for example, C₁₋₆alkyl means an alkyl of 1 to 6 carbon atoms. Examples of alkyl groups are methyl, ethyl, propyl, isopropyl (i-propyl), butyl, isobutyl (i-butyl), *sec*-butyl, *tert*-butyl, pentyl and its chain isomers, hexyl and its chain isomers.

The term "C₃₋₂₄cycloalkyl" as a group or part of a group, refers to a cyclic alkyl group, that is to say, a monovalent, saturated, or unsaturated hydrocarbyl group having 1 or 2 cyclic structure. Cycloalkyl includes all saturated hydrocarbon groups containing 1 to 2 rings, including monocyclic or bicyclic groups. Cycloalkyl groups may comprise 3 or more carbon atoms in the ring and generally, according to this invention comprise from 3 to 24, preferably 3 to 10; more preferably 3 to 6 carbon atoms. Examples of "C₃₋₁₀cycloalkyl" groups include but are not limited to cyclopropyl, cyclobutyl, cyclopentyl, cyclohexyl, cycloheptyl, cyclooctyl, cyclononyl, cyclodecyl. Examples of "C₃₋₆cycloalkyl" groups include but are not limited to cyclopropyl, cyclobutyl, cyclopentyl, cyclohexyl.

When the suffix "ene" is used in conjunction with an alkyl group, i.e. "alkylene", this is intended to mean the alkyl group as defined herein having two single bonds as points of attachment to other groups. For example, the term "C₁₋₂₀alkylene", as a group or part of a group, refers to C₁₋₂₀alkyl groups that are divalent, i.e., with two single bonds for attachment to two other groups. In a similar manner, the term"C₁₋₆alkylene", by itself or as part of another substituent, refers to C₁₋₆alkyl groups that are divalent, i.e., with two single bonds for attachment to two other groups. Alkylene groups may be linear or branched and may be substituted as indicated herein. Non-limiting examples of alkylene groups include methylene (-CH₂-), ethylene (-CH₂-CH₂-), methylmethylene (-CH(CH₃)-), 1-methylethylene (-CH(CH₃)-CH₂-), n-propylene (-CH₂-CH₂-CH₂-), 2-methylpropylene (-CH₂-CH(CH₃)-CH₂-), 3-methylpropylene (-CH₂-CH₂-CH(CH₃)-), n-butylene (-CH₂-CH₂-CH₂-CH₂-), 2-methylbutylene (-CH₂-CH(CH₃)-CH₂-CH₂-), 4-methylbutylene (-CH₂-CH₂-CH₂-CH(CH₃)-), pentylene and its chain isomers, hexylene and its chain isomers.

The term "aryl", as a group or part of a group, refers to a polyunsaturated, aromatic hydrocarbyl group having a single ring (i.e. phenyl) or multiple aromatic rings fused together (e.g. naphthyl) or linked covalently, typically containing 6 to 24 carbon atoms; preferably 6 to 10 carbon atoms, wherein at least one ring is aromatic. The aromatic ring may optionally include one to two additional rings fused thereto. Aryl is also intended to include the partially hydrogenated derivatives of the carbocyclic systems enumerated herein. Non-limiting examples of aryl comprise phenyl, biphenylyl, biphenylenyl, 5- or 6-tetralinyl, 1-, 2-, 3-, 4-, 5-, 6-, 7- or 8-azulenyl, naphthalen-1- or -2-yl, 4-, 5-, 6 or 7-indenyl, 1- 2-, 3-, 4- or 5-acenaphtylenyl, 3-, 4- or 5-acenaphtenyl, 1-, 2-, 3-, 4- or 10-phenanthryl, 1- or 2-pentalenyl, 4- or 5-indanyl, 5-, 6-, 7- or 8-tetrahydronaphthyl, 1,2,3,4-tetrahydronaphthyl, 1,4-dihydronaphthyl, 1-, 2-, 3-, 4- or 5-pyrenyl. "C₆₋₁₀aryl" refers to an aryl containing 6 to 10 atoms; wherein at least one ring is aromatic. Examples of C₆₋₁₀aryl include phenyl, naphthyl, indanyl, or 1,2,3,4-tetrahydro-naphthyl.

When the suffix "ene" is used in conjunction with an aryl group, i.e. arylene, this is intended to mean the aryl group as defined herein having two single bonds as points of attachment to other groups. For example, the term "C₆₋₂₀arylene" as a group or part of a group, refers to C₆₋₂₀aryl groups that are divalent, i.e., with two single bonds for attachment to two other groups; suitable C₆₋₂₀arylene groups include 1,4-phenylene, 1,2-phenylene, 1,3-phenylene, biphenylylene, naphthylene, indenylene, 1-, 2-, 5- or 6-tetralinylene, and the like.

The term "heteroaryl" as a group or part of a group, refers but is not limited to 5 to 12 carbon-atom aromatic rings or ring systems containing 1 to 2 rings which are fused together or linked covalently, typically containing 5 to 6 atoms; at least one of which is aromatic in which one or more carbon atoms in one or more of these rings can be replaced by N, O and/or S atoms where the N and S heteroatoms may optionally be oxidized and the N heteroatoms may optionally be quaternized. Such rings may be fused to an aryl, cycloalkyl, heteroaryl or heterocyclyl ring. Non-limiting examples of such heteroaryl include: pyrrolyl, furanyl, thiophenyl, pyrazolyl, imidazolyl, oxazolyl, isoxazolyl, thiazolyl, isothiazolyl, triazolyl, oxadiazolyl, thiadiazolyl, tetrazolyl, oxatriazolyl, thiatriazolyl, pyridinyl, pyrimidyl, pyrazinyl, pyridazinyl, oxazinyl, dioxinyl, thiazinyl, triazinyl, imidazo[2,1-b][1,3]thiazolyl, thieno[3,2-b]furanyl, thieno[3,2-b]thiophenyl, thieno[2,3-d][1,3]thiazolyl, thieno[2,3-d]imidazolyl, tetrazolo[1,5-a]pyridinyl, indolyl, indolizinyl, isoindolyl, benzofuranyl, isobenzofuranyl, benzothiophenyl, isobenzothiophenyl, indazolyl, benzimidazolyl, 1,3-benzoxazolyl, 1,2-benzisoxazolyl, 2,1-benzisoxazolyl, 1,3-benzothiazolyl, 1,2-benzoisothiazolyl, 2,1-benzoisothiazolyl, benzotriazolyl, 1,2,3-benzoxadiazolyl, 2,1,3-benzoxadiazolyl, 1,2,3-benzothiadiazolyl, 2,1,3-benzothiadiazolyl, benzo[d]oxazol-2(3H)-one; 2,3-dihydro-benzofuranyl; thienopyridinyl, purinyl, imidazo[1,2-a]pyridinyl, 6-oxo-pyridazin-1(6H)-yl, 2-oxopyridin-1(2H)-yl, 6-oxo-pyridazin-1(6H)-yl, 2-oxopyridin-1(2H)-yl, 1,3-benzodioxolyl, quinolinyl, isoquinolinyl, cinnolinyl, quinazolinyl, quinoxalinyl; preferably said heteroaryl group is selected from the group consisting of pyridyl, 1,3-benzodioxolyl, benzo[d]oxazol-2(3H)-one; 2,3-dihydro-benzofuranyl; pyrazinyl, pyrazolyl, pyrrolyl, imidazolyl, benzimidazolyl, pyrimidinyl, triazolyl and thiazolyl.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

According to a first aspect of the present invention, an isocyanate-containing prepolymer is provided, said prepolymer being obtainable by (a) contacting at least one isocyanate with at least one isocyanate-reactive compound and (b) contacting the product of step (a) with at least one amine; wherein said at least one isocyanate-reactive compound comprises at least one OH group; wherein the molar ratio of the NCO of said at least one isocyanate, to the OH of said at least one isocyanate-reactive compound is of at least 2.0; wherein said at least one isocyanate-reactive compound has a number average molecular weight of at least 2000 Da; and wherein the molar ratio of said at least one amine, to the NCO of the product of step (a) is greater than 0.4. Said prepolymer can also be obtainable by mixing at least one isocyanate with at least one isocyanate-reactive compound selected from the group comprising alcohols, and then mixing the product of said first mixing step with at least one amine.

As used herein, the term "isocyanate-containing prepolymer" refers to a prepolymer comprising at least one isocyanate -N=C=O group, whereby the isocyanate group may be a terminating group. Preferably, the isocyanate group is a terminating group.

The OH value (also referred to as OH number or OH content) can be measured according to the ASTM D 1957 standard. The OH value is expressed in mg KOH/gm.

The isocyanate-containing prepolymer according to the first aspect of the invention is obtained in a first step (a) by reacting at least one isocyanate with at least one .isocyanate-reactive compound. Suitable isocyanates for use in the preparation of the isocyanate-containing prepolymers of the invention may be aromatic, cycloaliphatic, heterocyclic, araliphatic or aliphatic organic isocyanates. Suitable isocyanates include also polyisocyanates.

Suitable polyisocyanates for use in preparing the isocyanate-containing prepolymers of the invention comprise polyisocyanates of the type R^{a}-(NCO)ₓ with x being at least 1 and R^{a} being an aromatic or aliphatic group, such as diphenylmethane, toluene, dicyclohexylmethane, hexamethylene, or a similar polyisocyanate.

Non-limiting examples of suitable polyisocyanates that can be used in the present invention can be any organic polyisocyanate compound or mixture of organic polyisocyanate compounds, preferably wherein said compounds comprise at least two isocyanate groups.

Non-limiting examples of organic polyisocyanates include diisocyanates, particularly aromatic diisocyanates, and isocyanates of higher functionality. Non-limiting examples of organic polyisocyanates which may be used in the formulation of the present invention include aliphatic isocyanates such as hexamethylene diisocyanate; and aromatic isocyanates such as diphenylmethane diisocyanate (MDI) in the form of its 2,4'-, 2,2'- and 4,4'-isomers and mixtures thereof (also referred to as pure MDI), the mixtures of diphenylmethane diisocyanates (MDI) and oligomers thereof (known in the art as "crude" or polymeric MDI), m- and p-phenylene diisocyanate, tolylene-2,4- and tolylene-2,6-diisocyanate (also known as toluene diisocyanate, and referred to as TDI, such as 2,4 TDI and 2,6 TDI) in any suitable isomer mixture, chlorophenylene-2,4-diisocyanate, naphthylene-1,5-diisocyanate, diphenylene-4,4'-diisocyanate, 4,4'-diisocyanate-3,3'-dimethyl-diphenyl, 3-methyl-diphenylmethane-4,4'-diisocyanate and diphenyl ether diisocyanate; and cycloaliphatic diisocyanates such as cyclohexane-2,4- and -2,3-diisocyanate, 1-methylcyclohexyl-2,4- and -2,6-diisocyanate and mixtures thereof and bis-(isocyanatocyclohexyl)methane (e.g. 4,4'-diisocyanatodicyclohexylmethane (H12MDI)), triisocyanates such as 2,4,6-triisocyanatotoluene and 2,4,4-triisocyanatodiphenylether, isophorone diisocyanate (IPDI), butylene diisocyanate, trimethylhexamethylene diisocyanate, isocyanatomethyl-1,8-octane diisocyanate, tetramethylxylene diisocyanate (TMXDI), 1,4-cyclohexanediisocyanate (CDI), and tolidine diisocyanate (TODI); any suitable mixture of these polyisocyanates, and any suitable mixture of one or more of these polyisocyanates with MDI in the form of its 2,4'-, 2,2'- and 4,4'-isomers and mixtures thereof (also referred to as pure MDI), the mixtures of diphenylmethane diisocyanates (MDI) and oligomers thereof (known in the art as "crude" or polymeric MDI), and reaction products of polyisocyanates (e.g. polyisocyanates as set out above, and preferably MDI-based polyisocyanates). Preferably diphenylmethane diisocyanate (MDI) or toluene diisocyanates (TDI)- type isocyanates are used.

In some embodiments, said at least one isocyanate comprises a polymeric methylene diphenyl diisocyanate.

The polymeric methylene diphenyl diisocyanate can be any mixture of pure MDI (2,4'-, 2,2'- and 4,4'-methylene diphenyl diisocyanate) and higher homologues of formula (A): 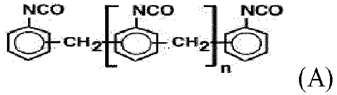 wherein n is an integer which can be from 1 to 10, preferably from 1 to 5.

Preferably, the at least one isocyanate is diphenylmethane diisocyanate.

The at least one isocyanate for use in the preparation of the isocyanate-containing prepolymer of the present invention can have an NCO value ranging from 0.5 wt% to 33 wt% by weight.

The NCO value (also referred to as percent NCO or NCO content) of the isocyanate can be measured by titration with dibutylamine according to the DIN 53185 standard. The NCO value is expressed in weight %.

The at least one isocyanate-reactive compound comprises at least one OH group, and has a number average molecular weight of at least 2000 Da. Examples of suitable isocyanate-reactive compounds containing isocyanate-reactive hydrogen atoms include polyols such as glycols or even relatively high molecular weight polyether polyols and polyester polyols, carboxylic acids such as polybasic acids, components comprising at least one alcohol group and at least one amine group, such as polyaminepolyols, urea and amides.

In some embodiments, said at least one isocyanate-reactive compound may have a number average molecular weight of at most 20000 Da, more preferably at most 10000 Da, even more preferably of at most 6000 Da, most preferably of at most 4000 Da. In some embodiments, said at least one isocyanate-reactive compound may have a number average molecular weight of at least 2000 Da; preferably of at least 2000 to at most 20000 Da, more preferably from at least 2000 to at most 10000 Da, even more preferably from at least 2000 to at most 6000 Da, most preferably from at least 2000 to at most 4000 Da. Keeping the molecular weight of the isocyanate-reactive compound within these ranges, allows producing low-viscosity isocyanate-containing prepolymers, with lower demand for an endcapping agent.

In some preferred embodiments, the at least one isocyanate reactive compound is selected from the group comprising polyols such as glycols; hydroxyl terminated polyesters (polyester polyols); hydroxyl terminated polyethers (polyether polyols); hydroxyl terminated polycarbonates and mixtures thereof.

Suitable hydroxyl terminated polyesters (polyester polyols), can be generally a polyester having a molecular weight (Mn) of at least 2000 Da; preferably, from at least 2000 to at most 10000 Da, preferably from at least 2000 to at most 6000 Da, most preferably from at least 2000 to at most 4000 Da. The molecular weight is determined by assay of the terminal functional groups and is related to the number average molecular weight. The hydroxyl terminated polyester can be produced by (1) an esterification reaction of one or more glycols with one or more dicarboxylic acids or anhydrides or (2) by transesterification reaction, i.e. the reaction of one or more glycols with esters of dicarboxylic acids. Mole ratios generally in excess of more than one mole of glycol to acid are preferred so as to obtain linear chains having a preponderance of terminal hydroxyl groups. Suitable polyesters also include various lactones such as polycaprolactone typically made from caprolactone and a bifunctional initiator such as diethylene glycol. The dicarboxylic acids of the desired polyester can be aliphatic, cycloaliphatic, aromatic, or combinations thereof. Suitable dicarboxylic acids which can be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, and the like. Anhydrides of the above dicarboxylic acids such as phthalic anhydride, tetrahydrophthalic anhydride, or the like, can also be used. Adipic acid is the preferred acid. The glycols which are reacted to form a desirable polyester intermediate can be aliphatic, aromatic, or combinations thereof, and have a total of from 2 to 12 carbon atoms, and include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and the like. 1,4-Butanediol is the preferred glycol.

Suitable hydroxyl terminated polyethers are preferably polyether polyols derived from a diol or polyol having a total of from 2 to 15 carbon atoms, preferably an alkyl diol or glycol which is reacted with an ether comprising an alkylene oxide having from 2 to 6 carbon atoms, typically ethylene oxide or propylene oxide or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol, poly(tetramethylglycol) (PTMG) comprising water reacted with tetrahydrofuran (THF). Polyether polyols further include polyamide adducts of an alkylene oxide and can include, for example, ethylenediamine adduct comprising the reaction product of ethylenediamine and propylene oxide, diethylenetriamine adduct comprising the reaction product of diethylenetriamine with propylene oxide, and similar polyamide type polyether polyols. Copolyethers can also be utilized in the current invention. Typical copolyethers include the reaction product of glycerol and ethylene oxide or glycerol and propylene oxide. The various polyethers can have molecular weight (Mn) of at least 2000 Da; preferably, from at least 2000 to at most 20000 Da, desirably from at least 2000 to at most 10000 Da, preferably from at least 2000 to at most 6000 Da, most preferably from at least 2000 to at most 4000 Da.

Suitable hydroxyl terminated polycarbonates for use in the present invention can be prepared by reacting a glycol with a carbonate. US 4131731 is hereby incorporated by reference for its disclosure of hydroxyl terminated polycarbonates and their preparation. Such polycarbonates are preferably linear and have terminal hydroxyl groups with essential exclusion of other terminal groups. The reactants are glycols and carbonates. Suitable glycols are selected from cycloaliphatic and aliphatic diols containing 4 to 40, and preferably 4 to 12 carbon atoms, and from polyoxyalkylene glycols containing 2 to 20 alkoxy groups per molecule with each alkoxy group containing 2 to 4 carbon atoms. Suitable diols include but are not limited to aliphatic diols containing 4 to 12 carbon atoms such as butanediol-1,4, pentanediol-1,4, neopentyl glycol, hexanediol-1,6, 2,2,4-trimethylhexanedion-1,6, decanediol-1,10, hydrogenated dilinoleylglycol, hydrogenated diolelylglycol; and cycloaliphatic diols such as cyclohexanediol-1,3, dimethylolcyclohexane-1,4, cyclohexanediol-1,4, dimethylolcyclohexane-1,3, 1,4-endomethylene-2-hydroxy-5-hydroxymethyl cyclohexane, and polyalkylene glycols. The diols used in the reaction may be a single diol or a mixture of diols depending on the properties desired in the finished product. Non-limiting examples of suitable carbonates include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate and 2,4-pentylene carbonate. Also suitable are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Preferred examples of diarylcarbonates, which can contain 6 to 20 carbon atoms in each aryl group, are diphenylcarbonate, ditolylcarbonate and dinaphthylcarbonate.

In some embodiments, the isocyanate-reactive component can be reacted with the isocyanate, along with an extender glycol. Non-limiting examples of suitable extender glycols (i.e., chain extenders) include lower aliphatic or short chain glycols having from about 2 to about 10 carbon atoms and include, for instance, ethylene glycol, diethylene glycol, propylene glycol, dipropylene glycol, 1,4-butanediol, 1,6-hexanediol, 1,3-butanediol, 1,5-pentanediol, 1,4-cyclohexanedimethanol, hydroquinone di(hydroxyethyl)ether, neopentylglycol, and the like.

In some embodiments, said at least one isocyanate-reactive compound has an average reactive functionality of at least 1.8. As used herein, the term "average reactive functionality" refers to the average number of reactive groups (functionality) per molecule, averaged over a statistically relevant number of molecules present in the isocyanate-reactive compound.

The isocyanate-containing prepolymers of the present invention are obtained by a process comprising the steps of (a) contacting at least one isocyanate with at least one isocyanate-reactive compound, wherein said at least one isocyanate-reactive compound comprises at least one OH group; wherein the molar ratio of the NCO of said at least one isocyanate, to the OH of said at least one isocyanate-reactive compound is of at least 2.0, preferably at most 20, preferably from at least 2.0 to at most 20, preferably from at least 2.0 to at most 10.0, more preferably from at least 2.0 to at most 7.0, and most preferably from at least 2.0 to at most 5.0.

The isocyanate-containing prepolymer is obtained by a process comprising the steps of (a) contacting at least one isocyanate with at least one isocyanate-reactive compound, and (b) contacting the product of step (a) with at least one amine, wherein the molar ratio of the amine, to the NCO of the product of step (a) is greater than 0.4; preferably greater than 0.4 and lower than 1.0, preferably said molar ratio is ranging from 0.41 to at most 1.0, preferably from 0.41 to at most 0.99. It is assumed that one amine consumes one NCO group. By keeping the molar ratios of amine to NCO of the product of step (a) within these ranges, the prepolymeric polysiocyanates contain very low quantities of free isocyanate monomer.

The NCO value of the product of step (a) can be measured as described herein before by titration with dibutylamine according to the DIN 53185 standard. The NCO value is expressed in weight %.

Suitable amines to be used with the product of step (a) can be selected from the group comprising primary amines, secondary amines, aminoalkyl methacrylates, aminoalkyl maleic anhydrides, aminosilanes and mixtures thereof. Preferably the at least one amine is carrying a group which can further crosslink, which affords an isocyanate-containing prepolymer with a dual cure system.

In some embodiments, the at least one amine is a compound of formula (I),

R¹NHR² (I)

wherein,
- R¹: is selected from H; C₁₋₂₄alkyl; C₃₋₂₄cycloalkyl; C₆₋₂₄aryl; or heteroaryl; and wherein said C₁₋₂₄alkyl; C₃₋₂₄cycloalkyl; C₆₋₂₄aryl; or heteroaryl can be unsubstituted or substituted with one or more halogen atoms or COOH groups; preferably R¹ is selected from H; C₁₂₄alkyl; C₃₋₂₄cycloalkyl; or C₆₋₂₄aryl; and wherein said C₁₋₂₄alkyl; C₃₋₂₄cycloalkyl; or C₆₂₄aryl can be unsubstituted or substituted with one or more halogen atoms or COOH groups; preferably R¹ is selected from H; C₁₋₆alkyl; C₃₋₁₀cycloalkyl; C₆₋₁₂aryl; or heteroaryl; and wherein said C₁₋₆alkyl; C₃₋₁₀cycloalkyl; C₆₋₁₂aryl; or heteroaryl can be unsubstituted or substituted with one or more halogen atoms or COOH groups; preferably R¹ is selected from H; C₁₋₆alkyl; C₃₋₁₀cycloalkyl; or C₆₋₁₂aryl; and wherein said C₁₋₆alkyl; C₃₋₁₀cycloalkyl; or C₆₋₁₂aryl can be unsubstituted or substituted with one or more halogen atoms or COOH groups; preferably R¹ is selected from H; C₁₋₄alkyl; C₃₋₆cycloalkyl; C₆₋₁₀aryl; or heteroaryl; and wherein said C₁₋₄alkyl; C₃₋₆cycloalkyl; C₆₁₀aryl; or heteroaryl can be unsubstituted or substituted with one or more halogen atoms or COOH groups; preferably R¹ is selected from H; C₁₋₄alkyl; C₃₋₆cycloalkyl; or C₆₁₀aryl; and wherein said C₁₋₄alkyl; C₃₋₆cycloalkyl; or C₆₋₁₀aryl; can be unsubstituted or substituted with one or more halogen atoms or COOH groups;
- R²: is selected from C₁₋₂₄alkyl; C₃₋₂₄cycloalkyl; C₆₋₂₄aryl; or heteroaryl; and wherein said C₁₋₂₄alkyl; C₃₋₂₄cycloalkyl; C₆₋₂₄aryl; or heteroaryl can be unsubstituted or substituted with one or more halogen atoms or COOH groups; preferably R² is selected from C₁₂₄alkyl; C₃₋₂₄cycloalkyl; or C₆₋₂₄aryl; and wherein said C₁₋₂₄alkyl; C₃₋₂₄cycloalkyl; or C₆₂₄aryl can be unsubstituted or substituted with one or more halogen atoms or COOH groups; preferably R² is selected from C₁₋₆alkyl; C₃₋₁₀cycloalkyl; C₆₋₁₀aryl; or heteroaryl; and wherein said C₁₋₆alkyl; C₃₋₁₀cycloalkyl; C₆₋₁₀aryl; or heteroaryl can be unsubstituted or substituted with one or more halogen atoms or COOH groups; preferably R² is selected from C₁₋₆alkyl; C₃₋₁₀cycloalkyl; or C₆₋₁₀aryl; and wherein said C₁₋₆alkyl; C₃₋₁₀cycloalkyl; or C₆₋₁₀aryl can be unsubstituted or substituted with one or more halogen atoms or COOH groups; preferably R² is selected from C₁₋₄alkyl; C₃₋₆cycloalkyl; C₆₋₁₀aryl; or heteroaryl; and wherein said C₁₋₄alkyl; C₃₋₆cycloalkyl; C₆₁₀aryl; or heteroaryl can be unsubstituted or substituted with one or more halogen atoms or COOH groups; preferably R² is selected from C₁₋₄alkyl; C₃₋₆cycloalkyl; or C₆₋₁₀aryl; and wherein said C₁₋₄alkyl; C₃₋₆cycloalkyl; or C₆₋₁₀aryl can be unsubstituted or substituted with one or more halogen atoms or COOH groups;
or R² is a group of formula (II),

*L¹-R³ (II)

wherein * represents where R² is bound to NH; and wherein,
- L¹: is selected from C₁₋₂₀alkylene or C₆₋₂₀arylene; preferably L¹ is selected from C₁₁₀alkylene or C₆₋₁₂arylene; preferably L¹ is selected from C₁₋₆alkylene or C₆₋₁₀arylene; preferably L¹ is selected from C₁₋₄alkylene or C₆₋₁₀arylene;
- R³: is selected from Si-(OR⁴)₃₋ₙ(R⁵)ₙ; O-CO-CO-CH₃; and O-CO-CR⁶=CR⁷COOH; preferably R³ is Si-(OR⁴)₃₋ₙ(R⁵)ₙ;
- n: is an integer selected from 0, 1 or 2; preferably n is an integer selected from 0 or 1; preferably n is an integer equal to 0; preferably n is an integer equal to 1;
- R⁴: is selected from C₁₋₂₀alkyl; and C₆₋₂₀aryl; preferably R⁴ is selected from C₁₋₁₀alkyl; and C₆₋₁₂aryl; preferably R⁴ is selected from C₁₋₆alkyl; and C₆₋₁₀aryl; preferably R⁴ is selected from C₁₋₄alkyl; and C₆₋₁₀aryl;
- R⁵: is selected from C₁₋₂₀alkyl; and C₆₋₂₀aryl; preferably R⁵ is selected from C₁₋₁₀alkyl; and C₆₋₁₂aryl; preferably R⁵ is selected from C₁₋₆alkyl; and C₆₋₁₀aryl; preferably R⁵ is selected from C₁₋₄alkyl; and C₆₋₁₀aryl;
- R⁶: is selected from H; and C₁₋₂₀alkyl; preferably R⁶ is selected from H; and C₁₋₁₀alkyl; preferably R⁶ is selected from H; and C₁₋₆alkyl; preferably R⁶ is selected from H; and C₁₋₄alkyl;
- R⁷: is selected from H; and C₁₋₂₀alkyl preferably R⁷ is selected from H; and C₁₋₁₀alkyl; preferably R⁷ is selected from H; and C₁₋₆alkyl; preferably R⁷ is selected from H; and C₁₋₄alkyl.

In some embodiments, the at least one amine is a compound of formula (I), wherein R² is a group of formula (II) and R³ is Si-(OR⁴)₃₋ₙ(R⁵)ₙ.

In some embodiments, the at least one amine is a compound of formula (I), wherein R² is a group of formula (II) and R³ is Si-(OR⁴)₃₋ₙ(R⁵)ₙ; and wherein,
- R¹: is selected from H; C₁₋₆alkyl; C₃₋₁₀cycloalkyl; C₆₋₁₀aryl; or heteroaryl; and wherein said C₁₋₆alkyl; C₃₋₁₀cycloalkyl; C₆₋₁₀aryl; or heteroaryl can be unsubstituted or substituted with one or more halogen atoms or COOH groups;
- L¹: is selected from C₁₋₆alkylene or C₆₋₁₀arylene;
- n: is an integer selected from 0 or 1;
- R⁴: is selected from C₁₋₄alkyl; and C₆₋₁₀aryl;
- R⁵: is selected from C₁₋₄alkyl; and C₆₋₁₀aryl.

In some embodiments, the at least one amine is a compound of formula (I), wherein R² is a group of formula (II) and R³ is selected from Si-(OR⁴)₃₋ₙ(R⁵)ₙ; and wherein,
- R¹: is selected from H; C₁₋₆alkyl; C₃₋₁₀cycloalkyl; C₆₋₁₀aryl; and wherein said C₁₋₆alkyl; C₃₋₁₀cycloalkyl; C₆₋₁₀aryl can be unsubstituted or substituted with one or more halogen atoms or COOH groups;
- L¹: is selected from C₁₋₆alkylene;
- n: is an integer selected from 0 or 1;
- R⁴: is selected from C₁₋₄alkyl;
- R⁵: is selected from C₁₋₄alkyl.

Preferably, the at least one amine is a compound of formula (III),

R¹¹-NH-R¹²-Si-(OR¹³)₃₋ₙ(R¹⁴)ₙ (III)

wherein,
- R¹¹: is selected from H; C₁₋₂₄alkyl; C₃₋₂₄cycloalkyl; C₆₋₂₄aryl; or heteroaryl; and wherein said C₁₋₂₄alkyl; C₃₋₂₄cycloalkyl; C₆₋₂₄aryl; or heteroaryl can be unsubstituted or substituted with one or more halogen atoms or COOH groups;
- R¹²: is selected from C₁₋₂₀alkylene or C₆₋₂₀arylene;
- R¹³: is selected from C₁₋₂₀alkyl; and C₆₋₂₀aryl;
- R¹⁴: is selected from C₁₋₂₀alkyl; and C₆₋₂₀aryl;
- n: is an integer selected from 0, 1 or 2.

In some embodiments, the at least one amine is a compound of formula (III), wherein,
- R¹¹: is selected from H; C₁₋₆alkyl; C₃₋₁₀cycloalkyl; C₆₋₁₀aryl; or heteroaryl; and wherein said C₁₋₆alkyl; C₃₋₁₀cycloalkyl; C₆₋₁₀aryl; or heteroaryl can be unsubstituted or substituted with one or more halogen atoms or COOH groups;
- R¹²: is selected from C₁₋₆alkylene or C₆₋₁₀arylene;
- n: is an integer selected from 0 or 1;
- R¹³: is selected from C₁₋₄alkyl; and C₆₋₁₀aryl;
- R¹⁴: is selected from C₁₋₄alkyl; and C₆₋₁₀aryl.

In some embodiments, the at least one amine is a compound of formula (III), wherein,
- R¹¹: is selected from H; C₁₋₆alkyl; C₃₋₁₀cycloalkyl; C₆₋₁₀aryl; and wherein said C₁₋₆alkyl; C₃₋₁₀cycloalkyl; C₆₋₁₀aryl can be unsubstituted or substituted with one or more halogen atoms or COOH groups;
- R¹²: is selected from C₁₋₆alkylene;
- n: is an integer selected from 0 or 1;
- R¹³: is selected from C₁₋₄alkyl;
- R¹⁴: is selected from C₁₋₄alkyl.

Non-limiting examples of suitable amines include but are not limited to an amine selected from the group comprising propyl amine, butyl amine, aniline, cyclohexylamine, dipropyl amine, dibutyl amine, dibenzyl amine, dicyclohexyl amine, diethylamine, 2-(dimethylamino)ethylmetacrylate, gamma-N-phenylaminopropyltrimethoxysilane, alpha-N-phenylaminomethyltrimethoxysilane, gamma-N-phenylaminopropyldimethoxymethylsilane, alpha-N-phenylaminomethyldimethoxymethylsilane, gamma-N-phenyl aminopropyltriethoxysilane, alpha-N-phenylaminomethyltriethoxysilane, gamma-N-phenylaminopropyldiethoxyethylsilane, alpha-N-phenylaminomethyldiethoxyethylsilane, gamma-N-butylaminopropyltrimethoxysilane, alpha-N-butylaminomethyltrimethoxysilane, gamma-N-butylaminopropyldimethoxymethylsilane, alpha-N-butylaminomethyldimethoxymethylsilane, gamma-N-butylaminopropyltriethoxysilane, alpha-N-butylaminomethyltriethoxysilane, gamma-N-butylaminopropyldiethoxyethylsilane, alpha-N-butylaminomethyldiethoxyethylsilane, gamma-N-methylaminopropyltrimethoxysilane, alpha-N-methylaminomethyltrimethoxysilane, gamma-N-methylaminopropyldimethoxymethylsilane, alpha-N-methylaminomethyldimethoxymethylsilane, gamma-N-methyl aminopropyltriethoxysilane, alpha-N-methylaminomethyltriethoxysilane, gamma-N-methylaminopropyldiethoxyethylsilane, alpha-N-methylaminomethyldiethoxy ethylsilane, gamma-N-cyclohexylaminopropyltrimethoxysilane, alpha-N-cyclohexylaminomethyltrimethoxysilane, gamma-N-cyclohexylaminopropyldimethoxymethylsilane, alpha-N-cyclohexylaminomethyldimethoxymethylsilane, gamma-N-cyclohexylaminopropyltriethoxysilane, alpha-N-cyclohexylaminomethyltriethoxysilane, gamma-N-cyclohexylaminopropyldiethoxyethylsilane, alpha-N-cyclohexylaminomethyldiethoxyethylsilane, gamma-aminopropyltrimethoxysilane, alpha-aminomethyltrimethoxysilane, gamma-aminopropyldimethoxymethylsilane, alpha-aminomethyldimethoxymethylsilane, gamma-aminopropyltriethoxysilane, alpha-aminomethyltriethoxysilane, gamma-aminopropyldiethoxyethylsilane, alpha-aminomethyldiethoxyethylsilane, and mixtures thereof.

Preferably, the at least one amine is selected from the group comprising gamma-N-phenylaminopropyltrimethoxysilane, alpha-N-phenylaminomethyltrimethoxysilane, gamma-N-phenylaminopropyldimethoxymethylsilane, alpha-N-phenylaminomethyldimethoxymethylsilane, gamma-N-phenyl aminopropyltriethoxysilane, alpha-N-phenylaminomethyltriethoxysilane, gamma-N-phenylaminopropyldiethoxyethylsilane, alpha-N-phenylaminomethyldiethoxyethylsilane, gamma-N-butylaminopropyltrimethoxysilane, alpha-N-butylaminomethyltrimethoxysilane, gamma-N-butylaminopropyldimethoxymethylsilane, alpha-N-butylaminomethyldimethoxymethylsilane, gamma-N-butylaminopropyltriethoxysilane, alpha-N-butylaminomethyltriethoxysilane, gamma-N-butylaminopropyldiethoxyethylsilane, alpha-N-butylaminomethyldiethoxyethylsilane, gamma-N-methylaminopropyltrimethoxysilane, alpha-N-methylaminomethyltrimethoxysilane, gamma-N-methylaminopropyldimethoxymethylsilane, alpha-N-methylaminomethyldimethoxymethylsilane, gamma-N-methyl aminopropyltriethoxysilane, alpha-N-methylaminomethyltriethoxysilane, gamma-N-methylaminopropyldiethoxyethylsilane, alpha-N-methylaminomethyldiethoxy ethylsilane, gamma-N-cyclohexylaminopropyltrimethoxysilane, alpha-N-cyclohexylaminomethyltrimethoxysilane, gamma-N-cyclohexylaminopropyldimethoxymethylsilane, alpha-N-cyclohexylaminomethyldimethoxymethylsilane, gamma-N-cyclohexylaminopropyltriethoxysilane, alpha-N-cyclohexylaminomethyltriethoxysilane, gamma-N-cyclohexylaminopropyldiethoxyethylsilane, alpha-N-cyclohexylaminomethyldiethoxyethylsilane, gamma-aminopropyltrimethoxysilane, alpha-aminomethyltrimethoxysilane, gamma-aminopropyldimethoxymethylsilane, alpha-aminomethyldimethoxymethylsilane, gamma-aminopropyltriethoxysilane, alpha-aminomethyltriethoxysilane, gamma-aminopropyldiethoxyethylsilane, alpha-aminomethyldiethoxyethylsilane, and mixtures thereof. More preferably, the at least one amine is selected from the group comprising gamma-N-phenylaminopropyltrimethoxysilane, gamma-N-butylaminopropyltrimethoxysilane, gamma-N-methylaminopropyltrimethoxysilane, gamma-N-cyclohexylaminopropyltrimethoxysilane, gamma-aminopropyltrimethoxysilane and mixtures thereof.

The present inventors have found that the prepolymer according to the first aspect of the invention can have an improved processability.

Preferably the NCO value of the prepolymer according to the invention is at most 25.0%, preferably at most 15%, preferably at most 10%, preferably at most 5.0%.

The isocyanate-containing prepolymer according to the present invention may have a reduced content of free (unreacted) isocyanate monomers. In some embodiments, the prepolymer according to the first aspect of the invention comprises at most 6.0% by weight of free isocyanate monomers, preferably at most 5.0% by weight of free isocyanate monomers, preferably at most 4.0%, preferably at most 3.0% by weight of free isocyanate monomers, preferably at most 2.0% by weight of free isocyanate monomers, preferably at most 1.0% by weight of free isocyanate monomers, preferably at most 0.5% by weight of free isocyanate monomers, preferably at most 0.1% by weight of free isocyanate monomers; with % by weight being based on 100% of the total weight of the prepolymer. Preferably, the free isocyanate monomer content is measured before addition of a plasticizer or a viscosity reducer. Preferably, the free monomer content is measured by quantitative HPLC analysis.

The prepolymer may comprise one or more additives. In some embodiments, the additive is present in an amount of at least 0.01% by weight, for example at least 0.03% by weight, for example at least 0.1% by weight, preferably at least 0.3% by weight, for example at least 0.5%, for example at least 1.0% by weight, based on the total weight of the prepolymer.

The additive may be a plasticizer. Preferably, the amount of plasticizer in the prepolymer is limited. In some preferred embodiments, the prepolymer comprises from 0.0% to at most 50.0% by weight of plasticizer, preferably from 0.0% to at most 15.0% by weight of plasticizer, preferably from 0.0% to at most 10.0% by weight of plasticizer, preferably from 0.0% to at most 5.0% by weight of plasticizer, preferably from 0.0% to at most 1.0% by weight of plasticizer, preferably from 0.00% to at most 0.01% by weight of plasticizer, preferably from 0.000% to at most 0.001% by weight of plasticizer, based on the total weight of the prepolymer.

Suitable plasticizers, for purposes of the present invention, comprise conventional plasticizers known in the art, such as esters of dibasic or polybasic carboxylic acids with monohydric alcohols. Non-limiting examples of such polycarboxylic acids may be selected from the group comprising succinic acid, isophthalic acid, trimellitic acid, phthalic acid anhydride, tetrahydrophthalic acid anhydride, hexahydrophthalic acid anhydride, endomethylene-tetrahydrophthalic acid anhydride, glutaric acid anhydride, maleic acid anhydride, fumaric acid and dimeric and trimeric fatty acids (such as oleic acid), and combinations thereof, which may be mixed with monomeric fatty acids. Non-limiting examples of suitable monohydric alcohols comprise C₁₋₂₀ linear, branched or cyclic hydroxyalkyl containing only one free OH group (also referred as monohydric C₁₋₂₀ hydroxyalkyl); polyesters containing only one free OH group (monohydric polyester), heterocyclyl containing only one free OH group (monohydric heterocyclyl); oxygen containing heterocyclyl containing only one free OH group, and blends thereof. For example, said monohydric alcohol can be a C₁₋₂₀ monohydric hydroxyalkyl, a C₂₋₁₈ monohydric hydroxyalkyl, a C₃₋₁₈ monohydric hydroxyalkyl, a C₄₋₁₈ monohydric hydroxyalkyl, a C₅₋₁₈ monohydric hydroxyalkyl, a C₆₋₁₈ monohydric hydroxyalkyl, or a C₆₁₈ monohydric hydroxyalkyl. Suitable polyesters comprise compounds containing at least one ester group and bearing at least one pendant alkyl or alkenyl group of at least four carbon atoms, said alkyl or said alkenyl group being substituted with only one free hydroxyl group. Examples of suitable monohydric oxygen containing heterocyclyl are cyclic trimethylolpropane formal and trimethylolpropane oxetane.

Other examples of suitable plasticizers may be selected from the group comprising phthalates, such as dioctyl phthalate, diisooctyl phthalate, diisononyl phthalate, dimethyl phthalate, dibutyl phthalate; phosphates, such as tributyl phosphate, triethyl phosphate (TEP), triphenyl phosphate and cresyl diphenyl phosphate; chlorinated biphenyls; aromatic oils; adipates, such as diisononyl adipate and di-(2-ethylhexyl) adipate; and combinations thereof. Specific examples of suitable plasticizers are commercially available from BASF Corporation under the trademark of PALATINOL®, such as PALATINOL® 711P, and under the trademark of PLASTOMOLL®, such as PLASTOMOLL® DNA and PLASTOMOLL® DOA.

Other examples of suitable plasticizers comprise phosphoric acid esters of the above-mentioned branched and unbranched aliphatic, cycloaliphatic and aromatic alcohols. If appropriate, phosphates of halogenated alcohols, for example, trichloroethyl phosphate, can also be employed. It is to be appreciated that mixed esters of the aforementioned alcohols and carboxylic acids can also be employed. So called polymeric plasticizers can also be employed for purposes of the present invention. Examples of such plasticizers may be selected from the group comprising polyesters of adipic acid, sebacic acid or phthalic acid. Phenol alkysulfonates, e.g. phenyl paraffinsulfonates, can also be employed. It is to be appreciated that the prepolymer may comprise any combination of two or more of the aforementioned plasticizers. Alternatively, such plasticizers may also be selected from alkylene carbonates, such as propylene carbonate and ethylene carbonate. These are commercially available from Huntsman under the Jeffsol^{®} trademark.

According to a second aspect, the present invention also encompasses a process for preparing an isocyanate-containing prepolymer according to the first aspect of the invention, comprising the steps of:
(a) contacting at least one isocyanate with at least one isocyanate-reactive compound; wherein said at least one isocyanate-reactive compound comprises at least one OH group; wherein the molar ratio of the NCO of said at least one isocyanate, to the OH of said at least one isocyanate-reactive compound is of at least 2.0; wherein said at least one isocyanate-reactive compound has a number average molecular weight of at least 2000 Da; and
(b) contacting the product of step (a) with at least one amine; wherein the molar ratio of said at least one amine, to the NCO of the product of step (a) is greater than 0.4,
thereby preparing an isocyanate-containing prepolymer.

The descriptions of the isocyanate, the isocyanate reactive compound and the amine given above apply mutatis mutandis to the process according to the second aspect of the invention.

Said process can also comprise the steps of:
(a) mixing at least one isocyanate with at least one isocyanate-reactive compound; and
(b) mixing the product of step (a) with at least one amine; thereby preparing an isocyanate-containing prepolymer.

Preferably, the addition of the at least one isocyanate and the addition of the at least one isocyanate-reactive compound is a stepwise process. In some embodiments, said process comprises the steps of:
(a) mixing and/or reacting at least one isocyanate with at least one isocyanate-reactive compound; and (b) subsequently, mixing and/or reacting the product of step (a) with at least one amine; thereby preparing an isocyanate-containing prepolymer.

In some embodiments, at least one mixing or reacting step is performed at a temperature of at least 25°C to at most 125 °C, preferably at least 35°C to at most 100°C, more preferably at least 40°C to at most 80°C. Preferably, the mixing and/or reacting step (a) is performed at a higher temperature than the mixing and/or reacting step (b). Preferably, all mixing and/or reacting steps are performed at said temperature.

The at least one isocyanate-reactive compound, may be gradually added to the at least one isocyanate, for example step wise, or it may be continuously added, for example drop by drop. Preferably, the isocyanate-reactive compound is continuously added drop by drop.

The at least one amine may be gradually added to the product of step (a), for example step wise, or it may be continuously added, for example drop by drop. Preferably, the amine is continuously added drop by drop.

In some embodiments, said process comprises the steps of:
(a) mixing and/or reacting at least one isocyanate with at least one isocyanate-reactive compound; and (b) subsequently, mixing and/or reacting the product of step (a) with at least one aminosilane; thereby preparing an isocyanate-containing prepolymer.

In some embodiments, at least one mixing or reacting step can be performed in the presence of a catalyst. All mixing and reacting steps can also be performed without a catalyst or in the presence of a catalyst.

Non-limiting examples of suitable catalysts include non-grafted catalysts, such as 2,2'-dimorpholinodiethylether (DMDEE, available commercially from Huntsman), and grafted catalysts, such as dimethylethanolamine (DMEA) and 2(2-Dimethylaminoethoxy)ethanol (DMEE).

In some embodiments, the catalyst is an organometallic catalyst. In these embodiments, the catalyst comprises an element selected from the group comprising tin, iron, lead, bismuth, mercury, titanium, hafnium, zirconium, and combinations thereof. In certain embodiments, the catalyst comprises a tin catalyst. Suitable tin catalysts, for purposes of the present invention, may be selected from tin(II) salts of organic carboxylic acids, e.g. tin(II) acetate, tin(II) octoate, tin(II) ethylhexanoate and tin(II) laurate. In some embodiments, the organometallic catalyst comprises dibutyltin dilaurate, which is a dialkyltin(IV) salt of an organic carboxylic acid. Specific examples of suitable organometallic catalyst, e.g. dibutyltin dilaurates, for purposes of the present invention, are commercially available from Air Products and Chemicals, Inc. under the trademark of DABCO®. The organometallic catalyst can also comprise other dialkyltin(IV) salts of organic carboxylic acids, such as dibutyltin diacetate, dibutyltin maleate and dioctyltin diacetate.

Non-limiting examples of other suitable catalysts may be selected from the group comprising iron(II) chloride; zinc chloride; lead octoate; tris(dialkylaminoalkyl)-s-hexahydrotriazines including tris(N,N-dimethylaminopropyl)-s-hexahydrotriazine; tetraalkylammonium hydroxides including tetramethylammonium hydroxide; alkali metal hydroxides including sodium hydroxide and potassium hydroxide; alkali metal alkoxides including sodium methoxide and potassium isopropoxide; and alkali metal salts of long-chain fatty acids having from 10 to 20 carbon atoms and/or lateral OH groups; triethylamine, N,N,N',N'-tetramethylethylenediamine, N,N-dimethylaminopropylamine, N,N,N',N',N"-pentamethyldipropylenetriamine, tris(dimethylaminopropyl)amine, N,N-dimethylpiperazine, tetramethylimino-bis(propylamine), dimethylbenzylamine, trimethyl amine, triethanolamine, N,N-diethyl ethanolamine, N-methylpyrrolidone, N-methylmorpholine, N-ethylmorpholine, bis(2-dimethylamino-ethyl)ether, N,N-dimethylcyclohexylamine (DMCHA), N,N,N',N',N"-pentamethyldiethylenetriamine, 1,2-dimethylimidazole, 3-(dimethylamino) propylimidazole; N,N,N-dimethylaminopropylhexahydrotriazine, potassium 2-ethylhexanoate, potassium acetate, N,N,N-trimethyl isopropyl amine/formate, and combinations thereof. It is to be appreciated that the catalyst component may include any combination of two or more of the aforementioned catalysts.

Preferably, the catalyst can be present in an amount of at least 10 ppm, for example at least 0.01% by weight, for example at most 5% by weight, for example at least 0.20% by weight, with % by weight being based on the total weight of the reaction mixture.

According to a third aspect, the invention encompasses a polyisocyanate composition comprising the isocyanate-containing prepolymer according to the first aspect of the invention.

In some embodiments, said composition further can comprise one or more additives selected from the group comprising fillers, adhesion promoters, moisture scavengers, plasticizers, UV stabilizers, thixotropic agents or combinations thereof.

The present invention also encompasses the use of the prepolymer according to the first aspect of the invention or the polyisocyanate composition according to the third aspect of the invention for the preparation of a polyurethane.

The present invention also encompasses the use of the prepolymer according to the first aspect of the invention or the polyisocyanate composition according to the third aspect of the invention for the preparation of an adhesive, a coating, an elastomer, a foam, and the like. The invention also encompasses said prepared adhesive, coating, elastomer, foam.

The prepolymers according to the present invention are highly suitable for example in applications for adhesives, coatings, elastomers, foams.

The present invention also encompasses a product comprising a composition according to the present invention. The present invention also encompasses a product, obtained by curing a composition according to the invention. Non-limiting list of suitable products comprises adhesives, coatings, elastomers, foams and the like.

In some embodiments, the product may be an adhesive. In some embodiments, the product may be an elastomer. In some other embodiments, the product may be a foam. In yet other embodiments, the product may be a coating.

The invention is illustrated but not limited by the following examples.

### EXAMPLES

The examples described hereunder illustrate the properties of the prepolymers and compositions according to embodiments of the present invention. Unless otherwise indicated, all parts and all percentages in the following examples, as well as throughout the specification, are parts by weight or percentages by weight respectively.

### Methods

The following methods were used in the examples:

The NCO value (NCOv) (or percent NCO) of the prepolymer or of the at least one isocyanate, given in weight %, was measured according to the DIN 53185 standard. In brief, isocyanate is reacted with an excess of di-n-butylamine to form ureas. The unreacted amine is then titrated with standard nitric acid to the color change of bromocresol green indicator or to a potentiometric endpoint. The percent NCO or NCO-value is defined as the percent by weight of NCO-groups present in the product.

The OH value (OHv) (also referred to as OH number or OH content) was measured according to the ASTM D 1957 standard. In brief, hydroxyl groups are acetylated with acetic anhydride in the presence of pyridine and heat. The excess acetic anhydride is hydrolyzed with water and the resulting acetic acid is titrated with standard potassium hydroxide solution. The OH value is expressed in mg KOH/g sample. The OH value was calculated using the following equation: OHv (mg KOH/g) = 56.1×(B-A)×N/S wherein S represents a sample weight (g); A represents the amount (mL) of the solution of potassium hydroxide required for titrating the sample; B represents the amount (mL) of the solution of potassium hydroxide required for a blank test; and N represents the normality of the potassium hydroxide solution.

The concentration in free monomer was measured by quantitative HPLC.

The functionality of the polyether polyol was determined via ¹³C NMR spectroscopy.

### Comparative Example 1: PrepoA

The following ingredients were used in the preparation of the prepolymer A:
Isocyanate: methylene diphenyl diisocyanate (MDI), with an NCO value of 33.6 wt%, commercially available from Huntsman Polyurethanes, under trade name Suprasec®3050.
Polyetherdiol: PPG2000, polypropylene glycol having a number average molecular weight of 2000 Da, with a OH value of 56 mg KOH/g, with a functionality of 2; commercially available from Huntsman Polyurethanes, under trade name Daltocel®F456,
MDI was weighted into a reaction flask under nitrogen atmosphere. PPG2000 was dried under vacuum at 100 °C and after cooling to 70°C, added to the MDI (2.0 mole of NCO per mole of OH) while blanketing with nitrogen and stirring vigorously. Then temperature was maintained until constant isocyanate value was reached.

The NCO content of PrepoA was 3.38 weight%. The measured free monomer content of PrepoA was 3.5 weight%.

### Example 1 (according to the invention) Prepo B

The following ingredients were used in the preparation of the prepolymer B:
MDI used was as described in Comparative example 1.
Polyetherdiol used was as described in Comparative example 1.
Amine-1: gamma-N-phenylaminopropyltrimethoxysilane, commercially available from Momentive under the trade name Silquest Y-9669.

To the prepolymer A from comparative example 1, 0.5 molar equivalents of the amine-1 (according to the NCO content of prepolymer A) (hence a molar ratio amine/NCO of 0.5) were added dropwise at 50 °C under stirring. Stirring was continued until a constant isocyanate value was reached. The resulting prepolymer was then filled into containers flushed with nitrogen.

The NCOv of the prepolymer B and the free monomer content of the prepolymer B were measured, and compared to the values of comparative example 1. The results are listed in Table 1.

**Table 1**

| | **NCO_{MDI}** | **OH_{PPG}** | **[NCO_{MDI}]/[OH_{PPG}]** | **NCO ₚᵣₑₚₒ** | **[Amine]/[NCO] _{prepoA}** | **Free isocyanate monomer** |
|---|---|---|---|---|---|---|
| | (wt %) | (mg KOH/g) | | (wt%) | | (wt%) |
| **Prepo B** | 33.6 | 56 | 2 | 1.43 | 0.50 | 0.3 |
| **Prepo A** | 33.6 | 56 | 2 | 3.38 | 0 | 3.5 |

Thus, tipping 0.5 molar equivalents of the isocyanate value with amine, reduced the monomer content by 90%.

### Comparative Example 2: Prepo C

The following ingredients were used in the preparation of the prepolymer C:
Isocyanate: methylene diphenyl diisocyanate (MDI), with an NCO value of 33.6 wt%, with a functionality of 2; commercially available from Huntsman Polyurethanes, under trade name Suprasec®1306.
Polyetherdiol used was as described in Comparative example 1.
MDI was weighted into a reaction flask under nitrogen atmosphere. PPG2000 was dried under vacuum at 100°C and after cooling to 70°C, added to the MDI (4.8 mole of NCO per mole of OH) while blanketing with nitrogen and stirring vigorously. Then temperature was maintained until a constant isocyanate value was reached.

The NCO content of PrepoC was 10.0 weight%. The measured free monomer content of PrepoC was 25.2 weight%.

### Example 2 (according to the invention) Prepo D

The following ingredients were used in the preparation of the prepolymer D:
MDI used was as described in Comparative example 2.
Polyetherdiol used was as described in Comparative example 1.
Amine-2: N-(n-Butyl)-3-aminopropyltrimethoxysilane, commercially available from Evonik under the trade name Dynasylan® 1189.

To the prepolymer C from comparative example 2, Amine-2 (gamma-N-butylaminopropyltrimethoxysilane) 0.5 molar equivalents of the amine-2 (according to the NCO content of prepolymer C) was added dropwise at 50 °C under stirring. Stirring was continued until a constant isocyanate value was reached. The resulting prepolymer was then filled into containers flushed with nitrogen.

The NCOv of the prepolymer D, and the free monomer content of the prepolymer D were measured, and compared to the values of the prepolymer C (comparative example 2).

The results are listed in Table 2.

**Table 2**

| | **NCO_{MDI}** | **OH_{PPG}** | **[NCO_{MDI}/[OH_{PPG}]** | **NCO ₚᵣₑₚₒ** | **[amine]/[NCO]_{prepoB}** | **Free isocyanate monomer** |
|---|---|---|---|---|---|---|
| | (wt %) | (mg KOH/g) | | (wt%) | | (wt%) |
| **Prepo D** | 33.6 | 56 | 4.8 | 3.5 | 0.5 | 5.4 |
| **Prepo C** | 33.6 | 56 | 4.8 | 10.0 | 0 | 25.5 |

Thus, tipping 0.5 molar equivalents of the isocyanate content with amine, reduced the monomer value by 80%.

It is to be understood that although preferred embodiments have been discussed for providing embodiments according to the present invention, various modifications or changes may be made without departing from the scope and spirit of this invention.

## Claims

1. An isocyanate-containing prepolymer obtainable by (a) contacting at least one isocyanate with at least one isocyanate-reactive compound and (b) contacting the product of step (a) with at least one amine; wherein said at least one isocyanate-reactive compound comprises at least one OH group; wherein the molar ratio of the NCO of said at least one isocyanate, to the OH of said at least one isocyanate-reactive compound is of at least 2.0; wherein said at least one isocyanate-reactive compound has a number average molecular weight of at least 2000 Da; and wherein the molar ratio of said at least one amine, to the NCO of the product of step (a) is greater than 0.4.

2. The isocyanate-containing prepolymer according to claim 1, wherein said at least one isocyanate-reactive compound has an average reactive functionality of at least 1.8 as measured by ¹³C NMR spectroscopy.

3. The isocyanate-containing prepolymer according to claims 1 or 2, wherein said at least one isocyanate-reactive compound is a polyol.

4. The isocyanate-containing prepolymer according to any one of claims 1 to 3, wherein said at least one isocyanate-reactive compound is selected from the group comprising glycols; hydroxyl terminated polyesters; hydroxyl terminated polyethers (polyether polyols); hydroxyl terminated polycarbonates; or mixtures thereof.

5. The isocyanate-containing prepolymer according to any one of claims 1 to 4, wherein said molar ratio of said at least one amine, to the NCO of said isocyanate-containing prepolymer is greater than 0.4 and lower than 1.0.

6. The isocyanate-containing prepolymer according to any one of claims 1 to 5, wherein said at least one amine is a compound of formula (I),
R¹NHR² (I)
wherein,
R¹ is selected from H; C₁₋₂₄alkyl; C₃₋₂₄cycloalkyl; C₆₋₂₄aryl; or heteroaryl; and wherein said C₁₋₂₄alkyl; C₃₋₂₄cycloalkyl; C₆₋₂₄aryl; or heteroaryl can be unsubstituted or substituted with one or more halogen atoms or COOH groups;
R² is selected from C₁₋₂₄alkyl; C₃₋₂₄cycloalkyl; C₆₋₂₄aryl; or heteroaryl; and wherein said C₁₋₂₄alkyl; C₃₋₂₄cycloalkyl; C₆₋₂₄aryl; or heteroaryl can be unsubstituted or substituted with one or more halogen atoms or COOH groups;
or R² is a group of formula (II),
*L¹-R³ (II)
wherein * represents where R² is bound to NH; and wherein,
L¹ is selected from C₁₋₂₀alkylene or C₆₋₂₀arylene;
R³ is selected from Si-(OR⁴)₃₋ₙ(R^{S})ₙ; O-CO-CO-CH₃; and O-CO-CR⁶=CR⁷COOH;
n is an integer selected from 0, 1 or 2;
R⁴ is selected from C₁₋₂₀alkyl; and C₆₋₂₀aryl;
R⁵ is selected from C₁₋₂₀alkyl; and C₆₋₂₀aryl;
R⁶ is selected from H; and C₁₋₂₀alkyl;
R⁷ is selected from H; and C₁₋₂₀alkyl.

7. The isocyanate-containing prepolymer according to claim 6, wherein said at least one amine is a compound of formula (I), wherein R² is a group of formula (II) and R³ is Si-(OR⁴)₃₋ₙ(R⁵)ₙ.

8. The isocyanate-containing prepolymer according to any one of claims 1 to 7, wherein said at least one amine is selected from the group comprising propyl amine, butyl amine, aniline, cyclohexylamine, dipropyl amine, dibutyl amine, dibenzyl amine, dicyclohexyl amine, diethylamine, 2-(dimethylamino)ethylmetacrylate, gamma-N-phenylaminopropyltrimethoxysilane, alpha-N-phenylaminomethyltrimethoxysilane, gamma-N-phenylaminopropyldimethoxymethylsilane, alpha-N-phenylaminomethyldimethoxymethylsilane, gamma-N-phenyl aminopropyltriethoxysilane, alpha-N-phenylaminomethyltriethoxysilane, gamma-N-phenylaminopropyldiethoxyethylsilane, alpha-N-phenylaminomethyldiethoxyethylsilane, gamma-N-butylaminopropyltrimethoxysilane, alpha-N-butylaminomethyltrimethoxysilane, gamma-N-butylaminopropyldimethoxymethylsilane, alpha-N-butylaminomethyldimethoxymethylsilane, gamma-N-butylaminopropyltriethoxysilane, alpha-N-butylaminomethyltriethoxysilane, gamma-N-butylaminopropyldiethoxyethylsilane, alpha-N-butylaminomethyldiethoxyethylsilane, gamma-N-methylaminopropyltrimethoxysilane, alpha-N-methylaminomethyltrimethoxysilane, gamma-N-methylaminopropyldimethoxymethylsilane, alpha-N-methylaminomethyldimethoxymethylsilane, gamma-N-methyl aminopropyltriethoxysilane, alpha-N-methylaminomethyltriethoxysilane, gamma-N-methylaminopropyldiethoxyethylsilane, alpha-N-methylaminomethyldiethoxy ethylsilane, gamma-N-cyclohexylaminopropyltrimethoxysilane, alpha-N-cyclohexylaminomethyltrimethoxysilane, gamma-N-cyclohexylaminopropyldimethoxymethylsilane, alpha-N-cyclohexylaminomethyldimethoxymethylsilane, gamma-N-cyclohexylaminopropyltriethoxysilane, alpha-N-cyclohexylaminomethyltriethoxysilane, gamma-N-cyclohexylaminopropyldiethoxyethylsilane, alpha-N-cyclohexylaminomethyldiethoxyethylsilane, gamma-aminopropyltrimethoxysilane, alpha-aminomethyltrimethoxysilane, gamma-aminopropyldimethoxymethylsilane, alpha-aminomethyldimethoxymethylsilane, gamma-aminopropyltriethoxysilane, alpha-aminomethyltriethoxysilane, gamma-aminopropyldiethoxyethylsilane, alpha-aminomethyldiethoxyethylsilane, and mixtures thereof.

9. The isocyanate-containing prepolymer according to any one of claims 1 to 8, wherein said at least one amine is selected from the group comprising gamma-N-phenylaminopropyltrimethoxysilane, gamma-N-butylaminopropyltrimethoxysilane, gamma-N-methylaminopropyltrimethoxysilane, gamma-N-cyclohexylaminopropyltrimethoxysilane, gamma-aminopropyltrimethoxysilane, and mixtures thereof.

10. The isocyanate-containing prepolymer according to any one of claims 1 to 9, wherein the isocyanate-containing prepolymer has a free isocyanate monomer content of at most 6.0% by weight, as measured by HPLC analysis.

11. Process for preparing an isocyanate-containing prepolymer according to any one of claims 1 to 10, comprising the steps of:
(a) contacting at least one isocyanate with at least one isocyanate-reactive compound; wherein said at least one isocyanate-reactive compound comprises at least one OH group; wherein the molar ratio of the NCO of said at least one isocyanate, to the OH of said at least one isocyanate-reactive compound is of at least 2.0; wherein said at least one isocyanate-reactive compound has a number average molecular weight of at least 2000 Da; and
(b) contacting the product of step (a) with at least one amine; wherein the molar ratio of said at least one amine, to the NCO of the product of step (a) is greater than 0.4;
thereby preparing an isocyanate-containing prepolymer.

12. A polyisocyanate composition comprising an isocyanate-containing prepolymer as defined in any one of claims 1 to 10.

13. Use of an isocyanate-containing prepolymer as defined in any one of claims 1 to 10 or a polyisocyanate composition as defined in claim 12, for the preparation of a polyurethane.

14. Use of an isocyanate-containing prepolymer as defined in any one of claims 1 to 10 or a polyisocyanate composition as defined in claim 12, for the preparation of an adhesive, a coating, an elastomer, or a foam.

15. A product comprising an isocyanate-containing prepolymer as defined in any one of claims 1 to 10 or a polyisocyanate composition as defined in claim 12.
